(19) Europäisches Patentamt
European Patent Office
Office européen des brevets

(11) **EP 3 197 067 A1**

(12) **EUROPEAN PATENT APPLICATION**
published in accordance with Art. 153(4) EPC

(43) Date of publication:
**26.07.2017  Bulletin 2017/30**

(51) Int Cl.:
*H04B 7/06* (2006.01)     *H04B 7/04* (2017.01)
*H04L 5/00* (2006.01)     *H04L 12/26* (2006.01)

(21) Application number: **14898368.7**

(22) Date of filing: **31.07.2014**

(86) International application number:
**PCT/CN2014/083421**

(87) International publication number:
**WO 2016/015282 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co. Ltd.
Shenzhen, Guangdong 518129 (CN)**

(72) Inventors:
• **QIAO, Deli
Shenzhen
Guangdong 518129 (CN)**
• **WU, Ye
Shenzhen
Guangdong 518129 (CN)**
• **WANG, Lei
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(54) **DATA TRANSMISSION METHOD AND APPARATUS**

(57)     Embodiments of the present invention provide a data transmission method and apparatus. A data sending method in the present invention includes: receiving uplink data or a pilot sent by user equipment by using an uplink subframe; performing beam characteristic design according to the uplink data or the pilot, and generating beam characteristic information; determining a precoding mode according to the beam characteristic information, and performing precoding processing on to-be-sent data according to the determined precoding mode, where the precoding mode includes a space-time based precoding mode or a space-frequency based precoding mode; and sending precoded to-be-sent data to the user equipment. In the embodiments of the present invention, a precoding mode can be flexibly selected according to uplink data or a pilot sent by user equipment.

FIG. 1

## Description

## TECHNICAL FIELD

Embodiments of the present invention relate to communications technologies, and in particular, to a data transmission method and apparatus.

## BACKGROUND

A massive multiple-input multiple-output (Massive Multiple-Input Multiple-Output, MMIMO for short) antenna system is widely considered as a necessary solution for a future 5G communications system.

To dig out an array gain of the MMIMO antenna system, a space-time block code (Space-Time Block Code, STBC for short) multi-antenna transmission solution is used in the prior art, where antenna selection is performed with reference to channel statistical information and channel characteristic information, and STBC data transmission is performed on a selected antenna.

However, when being applied to the MMIMO antenna system, this solution cannot achieve an adaptive adjustment of a precoding mode. In addition, a large quantity of antennas results in a narrow width of a formed beam, a serious loss in performance, and a reduced antenna array gain.

## SUMMARY

Embodiments of the present invention provide a data transmission method and apparatus to achieve an adaptive adjustment of a precoding mode, which makes data transmission of an MMIMO antenna system more robust and improves system performance and an antenna gain. The data transmission in the embodiments of the present invention includes sending data and receiving data.

According to a first aspect, an embodiment of the present invention provides a data sending method, including:

receiving uplink data or a pilot sent by user equipment by using an uplink subframe;
performing beam characteristic design according to the uplink data or the pilot, and generating beam characteristic information;
determining a precoding mode according to the beam characteristic information, and performing precoding processing on to-be-sent data according to the determined precoding mode, where the precoding mode includes a space-time based precoding mode or a space-frequency based precoding mode; and
sending precoded to-be-sent data to the user equipment.

With reference to the first aspect, in a first possible implementation manner of the first aspect, after the performing beam characteristic design according to the uplink data or the pilot, and generating beam characteristic information, the method further includes:

sending the beam characteristic information to the user equipment, so that the user equipment determines a data recovery method according to the beam characteristic information, where the data recovery method corresponds to the precoding mode.

With reference to the first aspect or the first possible implementation manner of the first aspect, in a second possible implementation manner of the first aspect, the performing beam characteristic design according to the uplink data or the pilot, and generating beam characteristic information includes:

estimating a position of the user equipment according to the uplink data or the pilot;
building an antenna steering vector matrix according to the position of the user equipment;
performing singular value decomposition on the antenna steering vector matrix to obtain a diagonal matrix; and
determining, according to the diagonal matrix, the beam characteristic information that meets a preset energy threshold.

With reference to the second possible implementation manner of the first aspect, in a third possible implementation manner of the first aspect, the determining, according to the diagonal matrix, the beam characteristic information that meets a preset energy threshold includes:

calculating a ratio of a sum of n largest elements on a main diagonal of the diagonal matrix to a sum of all elements on the main diagonal; and
determining the corresponding n as the beam characteristic information when the ratio is greater than the preset energy threshold, where n is a natural number.

With reference to the second or the third possible implementation manner of the first aspect, in a fourth possible implementation manner of the first aspect, the method further includes:

performing beam characteristic design according to the uplink data or the pilot, and generating a precoding parameter combination vector.

With reference to the fourth possible implementation manner of the first aspect, in a fifth possible implementation manner of the first aspect, the performing beam characteristic design according to the uplink data or the pilot, and generating a precoding parameter combination vector includes:

obtaining the precoding parameter combination vector according to the beam characteristic information and the antenna steering vector matrix.

With reference to the fourth or the fifth possible implementation manner of the first aspect, in a sixth possible implementation manner of the first aspect, the performing precoding processing on to-be-sent data according to the determined precoding mode includes:

performing precoding processing on the to-be-sent data according to the determined precoding mode and the precoding parameter combination vector.

According to a second aspect, an embodiment of the present invention provides a data receiving method, including:

receiving beam characteristic information sent by a base station, where the beam characteristic information is generated by the base station by performing beam characteristic design according to uplink data or a pilot;
determining a data recovery method according to the beam characteristic information, where the data recovery method corresponds to a precoding mode determined by the base station according to the beam characteristic information; and
receiving precoded data sent by the base station, and performing data recovery processing on the precoded data according to the data recovery method.

According to a third aspect, an embodiment of the present invention provides a data sending apparatus, including:

a receiving module, configured to receive uplink data or a pilot sent by user equipment by using an uplink subframe;
a precoding parameter combination generation module, configured to perform beam characteristic design according to the uplink data or the pilot, and generate beam characteristic information;
a precoding processing module, configured to determine a precoding mode according to the beam characteristic information, and perform precoding processing on to-be-sent data according to the determined precoding mode, where the precoding mode includes a space-time based precoding mode or a space-frequency based precoding mode; and
a sending module, configured to send precoded to-be-sent data to the user equipment.

With reference to the third aspect, in a first possible implementation manner of the third aspect, the sending module is further configured to send the beam characteristic information to the user equipment, so that the user equipment determines a data recovery method according to the beam characteristic information, where the data recovery method corresponds to the precoding mode.
With reference to the third aspect or the first possible implementation manner of the third aspect, in a second possible implementation manner of the third aspect, the precoding parameter combination generation module is specifically configured to: estimate a position of the user equipment according to the uplink data or the pilot; build an antenna steering vector matrix according to the position of the user equipment; perform singular value decomposition on the antenna steering vector matrix to obtain a diagonal matrix; and determine, according to the diagonal matrix, the beam characteristic information that meets a preset energy threshold.
With reference to the second possible implementation manner of the third aspect, in a third possible implementation manner of the third aspect, the precoding parameter combination generation module is specifically configured to: calculate a ratio of a sum of n largest elements on a main diagonal of the diagonal matrix to a sum of all elements on the main diagonal; and determine the corresponding n as the beam characteristic information when the ratio is greater than the preset energy threshold, where n is a natural number.
With reference to the second or the third possible implementation manner of the third aspect, in a fourth possible implementation manner of the third aspect, the precoding parameter combination generation module is further configured to perform beam characteristic design according to the uplink data or the pilot, and generate a precoding parameter combination vector.
With reference to the fourth possible implementation manner of the third aspect, in a fifth possible implementation manner of the third aspect, the precoding parameter combination generation module is specifically configured to obtain the precoding parameter combination vector according to the beam characteristic information and the antenna steering vector matrix.
With reference to the fourth or the fifth possible implementation manner of the third aspect, in a sixth possible implementation manner of the third aspect, the precoding processing module is specifically configured to perform precoding processing on the to-be-sent data according to the determined precoding mode and the precoding parameter combination vector.
According to a fourth aspect, an embodiment of the present invention provides a data receiving apparatus, including:

a receiving module, configured to receive beam characteristic information sent by a base station, where the beam characteristic information is generated by the base station by performing beam characteristic design according to uplink data or a pilot;
a data recovery method determining module, configured to determine a data recovery method according to a correspondence between the beam characteristic information and a data recovery method; where

the receiving module is further configured to receive precoded data sent by the base station; and

a data processing module, configured to perform data recovery processing on the precoded data according to the data recovery method.

The data recovery method determined by the foregoing data recovery method determining module corresponds to the precoding mode determined by the base station according to the beam characteristic information.

According to the data transmission method and apparatus in the embodiments of the present invention, beam characteristic design is performed according to a real-time channel status to obtain beam characteristic information and determine a space-time based precoding mode or a space-frequency based precoding mode, and to-be-sent data is processed by using the precoding mode and then sent to UE, which achieves an adaptive adjustment of a precoding mode, makes data transmission of an MMIMO antenna system more robust, and improves system performance and an antenna gain.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of an embodiment of a data sending method according to the present invention;
FIG. 2 is a schematic diagram of data transmission.
FIG. 3 is a flowchart of an embodiment of a data receiving method according to the present invention;
FIG. 4 is a schematic structural diagram of a first embodiment of a data sending apparatus according to the present invention;
FIG. 5 is a schematic structural diagram of a first embodiment of a data receiving apparatus according to the present invention;
FIG. 6 is a schematic structural diagram of a second embodiment of a data sending apparatus according to the present invention; and
FIG. 7 is a schematic structural diagram of a second embodiment of a data receiving apparatus according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In an STBC multi-antenna transmission solution, antenna selection is performed with reference to channel statistical information and channel characteristic information, and STBC data transmission is performed on a selected antenna. However, when there is a large quantity of antennas, a beam formed by using this method has a quite narrow width. Because there is no beam characteristic design, a loss in performance may be serious in a case in which an estimated position has an error in a direction of arrival (Direction Of Arrival, DOA for short). On the other hand, STBC precoding is fixedly designed and cannot support adaptive adjustment.

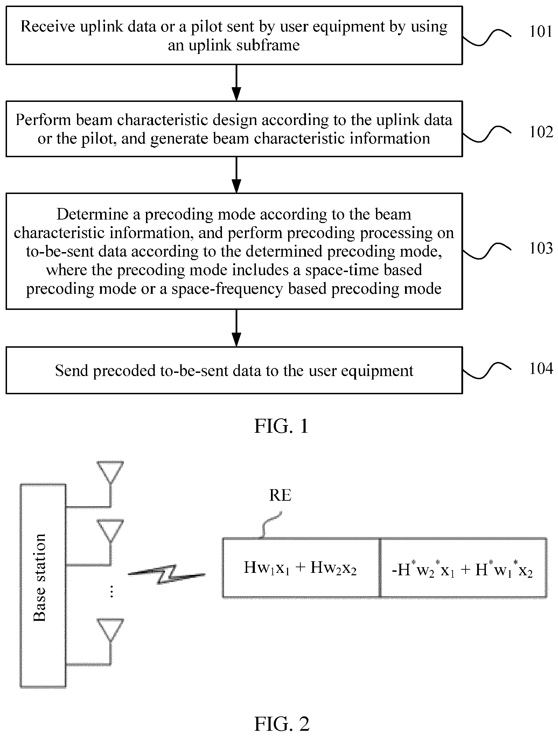

FIG. 1 is a flowchart of an embodiment of a data sending method according to the present invention. As shown in FIG. 1, the method in the embodiment may include the following steps.

Step 101: Receive uplink data or a pilot sent by user equipment by using an uplink subframe.

This embodiment may be executed by a base station supporting an MMIMO antenna system. The user equipment (User Equipment, UE for short) may be a mobile phone, a cordless telephone set, a computer device, a facsimile device or another device that can communicate with the base station.

Step 102: Perform beam characteristic design according to the uplink data or the pilot, and generate beam characteristic information.

The base station performs real-time beam characteristic design according to the uplink data or the pilot, and generates the beam characteristic information. The beam characteristic information reflects a quantity of virtual antennas for transmitting data to the UE in a current channel status. The virtual antennas of this quantity have maximum or relatively more energy to ensure an antenna gain in a multi-antenna system.

Step 103: Determine a precoding mode according to the beam characteristic information, and perform precoding processing on to-be-sent data according to the determined precoding mode, where the precoding mode includes a space-time based precoding mode or a space-frequency based precoding mode.

The base station may save a correspondence between beam characteristic information and a precoding mode. For example, if the beam characteristic information is 2, it indicates that the determined quantity of virtual antennas for transmitting data to the UE is 2. The base station determines, according to the correspondence between beam characteristic information and a precoding mode, that a corresponding precoding mode is STBC (for example, Alamouti code) when the beam characteristic information is 2. Then the base station performs precoding processing on the to-be-sent data according to the Alamouti code.

Step 104: Send precoded to-be-sent data to the user equipment.

The base station sends the precoded to-be-sent data to the UE, so that the UE performs recovery processing on the received data according to a data recovery method. The data recovery method herein corresponds to the precoding mode of the base station. For example, if the base station performs precoding on the to-be-sent data by using the Alamouti code, the UE also performs recovery on the data by a method corresponding to the Alamouti code.

In this embodiment, beam characteristic information for determining a precoding mode is designed according to a channel status. Therefore, the precoding mode may be flexibly adjusted according to an actual channel status, which makes data transmission of an MMIMO antenna system more robust, and improves performance of a communications system and an antenna gain.

Further, after step 102 in the foregoing method embodiment, the method further includes: sending the beam characteristic information to the user equipment, so that the user equipment determines a data recovery method according to the beam characteristic information, where the data recovery method corresponds to the precoding mode.

Specifically, after generating the beam characteristic information, the base station may send the beam characteristic information to the UE through a physical downlink control channel (Physical Downlink Control Channel, PDCCH for short), so that the UE can learn resource elements (Resource Element, RE for short) that are required for receiving data, and perform recovery processing according to the data recovery method corresponding to the beam characteristics information.

Further, a specific implementation method for step 102, in the foregoing method embodiment, of performing beam characteristic design according to the uplink data or the pilot, and generating beam characteristic information may be: estimating a position of the user equipment according to the uplink data or the pilot; building an antenna steering vector matrix according to the position of the user equipment; performing singular value decomposition on the antenna steering vector matrix to obtain a diagonal matrix; and determining, according to the diagonal matrix, the beam characteristic information that meets a preset energy threshold. A specific implementation method for the determining, according to the diagonal matrix, the beam characteristic information that meets a preset energy threshold may be: calculating a ratio of a sum of n largest elements on a main diagonal of the diagonal matrix to a sum of all elements on the main diagonal; and determining the corresponding n as the beam characteristic information when the ratio is greater than the preset energy threshold, where n is a natural number.

Specifically, the performing, by the base station, beam characteristic design according to the uplink data or the pilot, and generating beam characteristic information may be implemented in multiple manners. The antenna gain may be improved as long as a virtual antenna having largest energy relative to the UE can be found from multiple virtual antennas and data transmission is performed on the virtual antenna.

Further, in step 102 of the foregoing method embodiment, when the base station performs beam characteristic design according to the uplink data or the pilot, in addition to the beam characteristic information, a precoding parameter combination vector may also be generated. A specific implementation method may be: obtaining the precoding parameter combination vector according to the beam characteristic information and the antenna steering vector matrix.

The following uses two specific embodiments to describe in detail the technical solution in the foregoing method embodiment.

Example 1:

The estimating, by the base station, a position of the user equipment according to the uplink data or the pilot may be implemented in the following manner:

For example, the base station estimates a position angle $\theta_0$ of the UE by means of DOA according to the uplink data or the pilot, and determines an angle range $\Theta = [\theta_1, \theta_N]$ according to the position angle $\theta_0$, where $\theta_1$ may be $\theta_0 - \Delta\theta$ or may be $\theta_0$, $\theta_N$ may be $\theta_0 + \Delta\theta$, and $\Delta\theta$ is a preset step value. A person skilled in the art may obtain the angle range $\Theta$ by using any known method, which is not specifically limited herein.

The building an antenna steering vector matrix according to the position of the user equipment may be implemented in the following manner: For example, the base station performs equal-interval sampling within the foregoing angle range $\Theta$, to obtain N sampling points $\theta_1$, $\theta_2$, ... $\theta_N$ altogether, and builds, based on each of the sampling points, an antenna steering vector matrix $\mathbf{C} = [\mathbf{A}(\theta)\ \mathbf{B}(\theta)]$, where $\mathbf{A}(\theta) = [\mathbf{a}(\theta_1)\ \mathbf{a}(\theta_2)......\mathbf{a}(\theta_N)]$, $\mathbf{B}(\theta) = [\mathbf{b}(\theta_1)\ \mathbf{b}(\theta_1)......\mathbf{b}(\theta_N)]$, $\mathbf{a}(\theta_n)$ is an antenna steering vector corresponding to an angle $\theta_n$ ($1 \leq n \leq N$),

$$\mathbf{b}(\theta_n) = \frac{\partial}{\partial\theta}\mathbf{a}(\theta)\Big|_{\theta=\theta_n},\ \text{and}\ \theta_n\ \text{is any sampling angle}$$

within the angle range $\Theta$.

The performing singular value decomposition on the antenna steering vector matrix to obtain a diagonal matrix may be implemented in the following manner: for example, performing singular value decomposition (Singular Value Decomposition, SVD for short) on the antenna steering vector matrix **C**, that is, **C** = **U**$\Sigma$**V**$^H$, to obtain

the diagonal matrix $\Sigma = \begin{pmatrix} a_1 & & 0 \\ & \ddots & \\ 0 & & a_n \end{pmatrix}$.

The determining, according to the diagonal matrix, the beam characteristic information that meets a preset energy threshold may be implemented in the following manner: for example, determining, according to the diagonal matrix $\Sigma$, the beam characteristic information that meets the preset energy threshold, that is, calculating a ratio of a sum of m largest elements on a main diagonal of the diagonal matrix $\Sigma$ to a sum of all elements on the main diagonal, and determining the corresponding m as the beam characteristic information when the ratio is greater than the preset energy threshold. Specifically, the sum of all elements on the main diagonal of the diagonal matrix $\Sigma$ is calculated, elements $a_1$ to $a_n$ are sorted in descending order, and the sum of m elements is calculated in sequence, where m increases one by one from 2. A ratio of each summation result to the sum of all elements is calculated, and the ratio is compared with the preset energy threshold until the ratio is greater than the preset energy threshold. A corresponding value of m at that time is the beam characteristic information. This indicates that energy of virtual antennas corresponding to the m descending elements already can meet a data transmission requirement. A space-time based precoding mode or a space-frequency based precoding mode is determined according to the value of m. For example, when the value of m is 2, it is determined that precoding is performed on data by using an STBC precoding mode (for example, Alamouti code). Then, the precoding parameter combination vector $\mathbf{W} = \dfrac{\mathbf{U}(:,1:m)}{\sqrt{m}}$ is obtained by means of calculation according to the value of m.

Example 2:

The estimating, by the base station, a position of the user equipment according to the uplink data or the pilot may be implemented in the following manner:

For example, after obtaining a position angle $\theta_0$ of the UE by means of DOA estimation, the base station determines an angle range $\Theta = [\theta_1, \theta_N]$ according to the angle. The method for determining the angle

range $\Theta$ is the same as that in example 1, and details are not described herein.

Different from the previous example, the building, by the base station, an antenna steering vector matrix according to the position of the user equipment may be implemented in the following manner: For example, the base station takes $B = \max(\theta_N - \theta_0, \theta_0 - \theta_1)$ and builds an antenna steering vector matrix **C**, where an element at an intersection of a row p and a column q in the antenna steering vector matrix **C** is

$$c_{pq} = \frac{\sin(2\pi B(p-q))}{\pi(p-q)}$$ and both p and q are less than a quantity of antennas. Afterwards, the performing, by the base station, singular value decomposition on the antenna steering vector matrix to obtain a diagonal matrix may be specifically: performing SVD decomposition on the antenna steering vector matrix **C**, that is, **C** = **U**$\Sigma$**V**$^H$, where the diagonal matrix

$\Sigma = \begin{pmatrix} a_1 & & 0 \\ & \ddots & \\ 0 & & a_n \end{pmatrix}$ The determining, by the base station according to the diagonal matrix, the beam characteristic information that meets a preset energy threshold may be specifically: determining, according to the diagonal matrix $\Sigma$, the beam characteristic information that meets the preset energy threshold, that is, calculating a ratio of a sum of m largest elements on a main diagonal of the diagonal matrix $\Sigma$ to a sum of all elements on the main diagonal, and determining the corresponding m as the beam characteristic information when the ratio is greater than the preset energy threshold. The sum of all elements on the main diagonal of the diagonal matrix $\Sigma$ is calculated, elements $a_1$ to $a_n$ are sorted in descending order, and the sum of m elements is calculated in sequence, where m increases one by one from 2. A ratio of each summation result to the sum of all elements is calculated, and the ratio is compared with the preset energy threshold until the ratio is greater than the preset energy threshold. A corresponding value of m at that time is the beam characteristic information. The precoding parameter combination vector

$$\mathbf{w}_k = \frac{\varepsilon_k \times \mathbf{U}(:,k) \times \mathbf{a}^*(\theta_0)}{\sqrt{m}}$$ is obtained by means of calculation according to the value of m, where

$1 \le k \le m,\ \varepsilon_k = \begin{cases} 1, k \text{ is an even number} \\ -j, k \text{ is an odd number} \end{cases}$,

and $\mathbf{a}^*(\theta_0)$ is a conjugate vector of an antenna steering vector corresponding to the position angle $\theta_0$.

The base station may generate the beam characteristic information m and the precoding parameter combination vector **W** according to the foregoing two examples, and then determine the space-time based precoding mode or the space-frequency based precoding mode according to the value of m. For example, when the value of m is 2, the precoding mode is determined as STBC (for example, Alamouti code). Then, precoding is performed on to-be-sent data according to the STBC mode (for example, Alamouti code) and the precoding parameter combination vector ($\mathbf{w}_1$, $\mathbf{w}_2$). The base station performs space-time based or space-frequency based precoding processing on the to-be-sent data according to the beam characteristic information m and the precoding parameter combination vector **W**. In this case, each precoding vector $\mathbf{w}_k$ is equivalent to a virtual antenna. Data obtained after the precoding processing is sent by using all physical antennas. FIG. 2 is a schematic diagram of data transmission. As shown in FIG. 2, the beam characteristic information m = 2 may be designed as Alamouti code. The precoding parameter combination vector ($\mathbf{w}_1$, $\mathbf{w}_2$) is known. The to-be-sent data is processed according to a formula

$$\begin{bmatrix} y_1 \\ -y_2^* \end{bmatrix} = \begin{bmatrix} \mathbf{H}\mathbf{w}_1 & \mathbf{H}\mathbf{w}_2 \\ -\mathbf{H}\mathbf{w}_2^* & \mathbf{H}\mathbf{w}_1^* \end{bmatrix} \begin{bmatrix} x_1 \\ x_2 \end{bmatrix},$$ where

$\begin{bmatrix} y_1 \\ -y_2^* \end{bmatrix}$ represents data that is obtained after performing precoding on two successive REs by the base station

and then sent, $\begin{bmatrix} \mathbf{H}\mathbf{w}_1 & \mathbf{H}\mathbf{w}_2 \\ -\mathbf{H}\mathbf{w}_2^* & \mathbf{H}\mathbf{w}_1^* \end{bmatrix}$ represents a precoding vector of the Alamouti code, **H** is a channel response

vector, and $\begin{bmatrix} x_1 \\ x_2 \end{bmatrix}$ represents the to-be-sent data. The base station sends the precoded data to the UE, and the beam characteristic information has been sent to the UE through a PDCCH. To enable the UE to receive and recover the data, the UE needs to know an equivalent channel **Hw** corresponding to a virtual antenna. Therefore, the base station needs to send a corresponding demodulation reference signal (Demodulation Reference Signal, DMRS for short) pilot according to the space-time based precoding mode or the space-frequency based precoding mode and the precoding parameter combination vector.

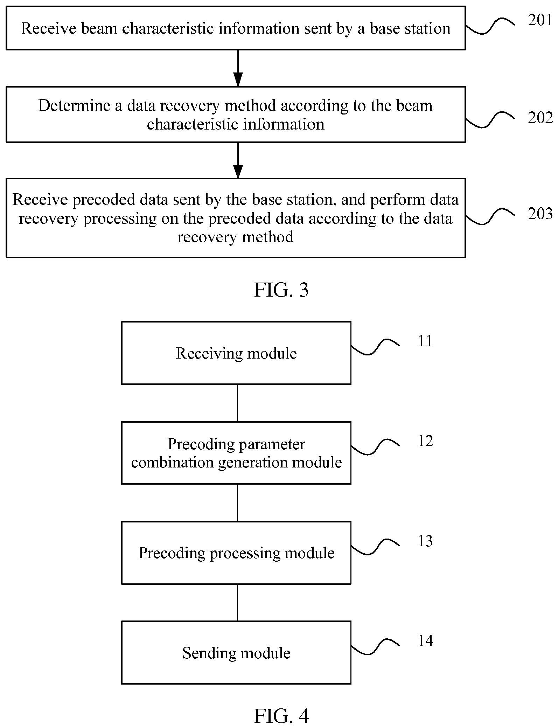

FIG. 3 is a flowchart of an embodiment of a data receiving method according to the present invention. As shown in FIG. 3, the method in the embodiment may include the following steps.

Step 201: Receive beam characteristic information sent by a base station.

This embodiment may be executed by UE supporting an MMIMO antenna system. The UE receives the beam characteristic information sent by the base station, where the beam characteristic information is generated by the base station by performing beam characteristic design according to uplink data or a pilot.

Step 202: Determine a data recovery method according to the beam characteristic information.

The data recovery method corresponds to a precoding mode determined by the base station according to the beam characteristic information.

Specifically, the UE may save a correspondence between the beam characteristic information and a precoding mode. Therefore, a precoding mode used for data received from the base station may be determined according to the beam characteristic information, and a data recovery method (for example, a decoding mode) corresponding to the precoding mode may be further determined. Subsequently, the UE recovers the received data (data obtained by precoding by the base station) by using this data recovery method.

Alternatively, the UE may directly save a correspondence between the beam characteristic information and a data recovery method (for example, a decoding mode). After receiving the foregoing beam characteristic information, the UE may obtain a corresponding data recovery method according to the correspondence.

Step 203: Receive precoded data sent by the base station, and perform data recovery processing on the precoded data according to the data recovery method.

Specifically, after receiving the beam characteristic information sent by the base station, the UE combines multiple corresponding REs to receive the data. Specifically, a quantity of combined REs is equal to a value of the beam characteristic information. An RE includes two dimensions: a time domain and a frequency domain. If space-time coding is pre-configured in a radio system, it indicates that the base station adds the precoded data to multiple time-successive REs (as shown in FIG. 2). If space-frequency coding is pre-configured in the radio system, it indicates that the base station adds the precoded data to multiple REs on successive frequency bands. The UE can receive, according to the pre-configuration of the radio system and the beam characteristic information, the data on the corresponding REs, and perform data recovery. It is assumed that a channel matrix **H** is known. For example, m = 2. The UE receives the data

$$\begin{bmatrix} y_1 \\ -y_2^* \end{bmatrix} = \begin{bmatrix} \mathbf{H}\mathbf{w}_1 & \mathbf{H}\mathbf{w}_2 \\ -\mathbf{H}\mathbf{w}_2^* & \mathbf{H}\mathbf{w}_1^* \end{bmatrix} \begin{bmatrix} x_1 \\ x_2 \end{bmatrix} + \begin{bmatrix} z_1 \\ -z_2^* \end{bmatrix}$$ on

two time-successive REs, where $y_n, z_n \in C_x^{R \times 1}$, and $R_x$ represents a quantity of received antennas. If

$$D = \begin{bmatrix} Hw_1 & Hw_2 \\ -Hw_2^* & Hw_1^* \end{bmatrix}$$

and the received data is left multiplied by

$$D^{-1} = \frac{1}{\|Hw_1\|^2 + \|Hw_2\|^2} \begin{bmatrix} w_1^H H^H & -w_2^T H \\ w_2^H H^H & w_1^T H \end{bmatrix},$$

that is, $D^{-1} \begin{bmatrix} y_1 \\ -y_2^* \end{bmatrix} = \begin{bmatrix} x_1 \\ x_2 \end{bmatrix} + D^{-1} \begin{bmatrix} z_1 \\ -z_2^* \end{bmatrix}$, the transmitted data can be recovered.

In this embodiment, a value of m affects final demodulation performance of UE. Based on a DOA estimation result, as a beam width of a multi-antenna transmission apparatus changes, the value of m may vary. When a quantity of antennas changes, the value of m may also vary. A change in the value of m brings a change in a precoding mode. A manner for sending data by combining with an RE also changes correspondingly. The multi-antenna transmission apparatus performs beam characteristic design according to a real-time channel status, and determines, according to the beam characteristic design, a precoding mode to be used for sending the data to the UE. Therefore, an adaptive adjustment of the precoding mode is achieved, which makes data transmission of an MMIMO antenna system more robust and improves performance of a communications system and an antenna gain.

FIG. 4 is a schematic structural diagram of a first embodiment of a data sending apparatus according to the present invention. As shown in FIG. 4, the apparatus in this embodiment may include: a receiving module 11, a precoding parameter combination generation module 12, a precoding processing module 13 and a sending module 14. The receiving module 11 is configured to receive uplink data or a pilot sent by user equipment by using an uplink subframe. The precoding parameter combination generation module 12 is configured to perform beam characteristic design according to the uplink data or the pilot, and generate beam characteristic information. The precoding processing module 13 is configured to determine a precoding mode according to the beam characteristic information, and perform precoding processing on to-be-sent data according to the determined precoding mode, where the precoding mode includes a space-time based precoding mode or a space-frequency based precoding mode. The sending module 14 is configured to send precoded to-be-sent data to the user equipment.

The apparatus in this embodiment may be configured to execute the technical solution of the method embodiment shown in FIG. 1, implementation principles and technical effects of the apparatus and the method embodiment are similar, and details are not described herein.

Further, the sending module 14 is further configured to send the beam characteristic information to the user equipment, so that the user equipment determines a data recovery method according to the beam characteristic information, and the data recovery method corresponds to the precoding mode.

Further, the precoding parameter combination generation module 12 is specifically configured to: estimate a position of the user equipment according to the uplink data or the pilot; build an antenna steering vector matrix according to the position of the user equipment; perform singular value decomposition on the antenna steering vector matrix to obtain a diagonal matrix; and determine, according to the diagonal matrix, the beam characteristic information that meets a preset energy threshold.

Further, the precoding parameter combination generation module 12 is specifically configured to: calculate a ratio of a sum of n largest elements on a main diagonal of the diagonal matrix to a sum of all elements on the main diagonal; and determine the corresponding n as the beam characteristic information when the ratio is greater than the preset energy threshold, where n is a natural number.

Further, the precoding parameter combination generation module 12 is further configured to perform beam characteristic design according to the uplink data or the pilot, and generate a precoding parameter combination vector.

Further, the precoding parameter combination generation module 12 is specifically configured to obtain the precoding parameter combination vector according to the beam characteristic information and the antenna steering vector matrix.

For a specific manner in which the precoding parameter combination generation module 12 performs beam characteristic design according to the uplink data or the pilot and generates the beam characteristic information, refer to related descriptions of the foregoing method embodiment. Details are not described herein.

Further, the precoding processing module 13 is specifically configured to perform precoding processing on the to-be-sent data according to the determined precoding mode and the precoding parameter combination vector.

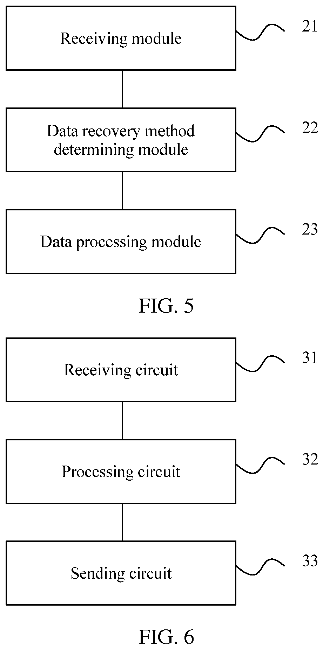

FIG. 5 is a schematic structural diagram of a first embodiment of a data receiving apparatus according to the present invention. As shown in FIG. 5, the apparatus in this embodiment may include: a receiving module 21, a data recovery method determining module 22, and a data processing module 23. The receiving module 21 is configured to receive beam characteristic information sent by a base station, where the beam characteristic information is generated by the base station by performing beam characteristic design according to uplink data or a pilot. The data recovery method determining module 22 is configured to determine a data recovery method according to the beam characteristic information, where the data recovery method corresponds to a precoding mode determined by the base station according to the beam characteristic information. The receiving module 21 is further configured to receive precoded data sent by the base station. The data processing module 23 is configured to perform data recovery processing on the precoded data according to the data recovery method.

The apparatus in this embodiment may be configured to execute the technical solution of the method embodiment shown in FIG. 3, implementation principles and technical effects of the apparatus and the method embodiment are similar, and details are not described herein.

FIG. 6 is a schematic structural diagram of a second embodiment of a data sending apparatus according to the present invention. As shown in FIG. 6, the apparatus in this embodiment may include: a receiving circuit 31, a processing circuit 32, and a sending circuit 33. The receiving circuit 31 is configured to receive uplink data or a pilot sent by user equipment by using an uplink subframe. The processing circuit 32 is configured to: perform beam characteristic design according to the uplink data or the pilot, and generate beam characteristic information; and determine a precoding mode according to the beam characteristic information, and perform precoding processing on to-be-sent data according to the determined precoding mode, where the precoding mode including a space-time based precoding mode or a space-frequency based precoding mode. The sending circuit 33 is configured to send precoded to-be-sent data to the user equipment.

The apparatus in this embodiment may be configured to execute the technical solution of the method embodiment shown in FIG. 1, implementation principles and technical effects of the apparatus and the method embodiment are similar, and details are not described herein.

Further, the sending circuit 33 is further configured to send the beam characteristic information to the user equipment, so that the user equipment determines a data recovery method according to the beam characteristic information, and the data recovery method corresponds to the precoding mode.

Further, the processing circuit 32 is specifically configured to: estimate a position of the user equipment according to the uplink data or the pilot; build an antenna steering vector matrix according to the position of the user equipment; perform singular value decomposition on the antenna steering vector matrix to obtain a diagonal matrix; and determine, according to the diagonal matrix, the beam characteristic information that meets a preset energy threshold.

Further, the processing circuit 32 is specifically configured to: calculate a ratio of a sum of n largest elements on a main diagonal of the diagonal matrix to a sum of all elements on the main diagonal; and determine the corresponding n as the beam characteristic information when the ratio is greater than the preset energy threshold, where n is a natural number.

For a specific manner in which the processing circuit 32 performs beam characteristic design according to the uplink data or the pilot and generates the beam characteristic information, refer to related descriptions of the foregoing method embodiment. Details are not described herein.

Further, the processing circuit 32 is further configured to perform beam characteristic design according to the uplink data or the pilot, and generate a precoding parameter combination vector.

Further, the processing circuit 32 is specifically configured to obtain the precoding parameter combination vector according to the beam characteristic information and the antenna steering vector matrix.

Further, the processing circuit 32 is specifically configured to perform precoding processing on the to-be-sent data according to the determined precoding mode and the precoding parameter combination vector.

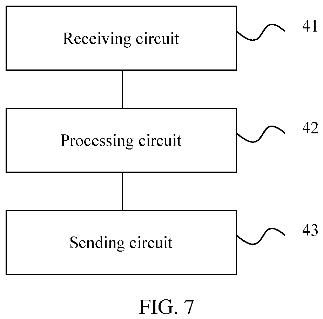

FIG. 7 is a schematic structural diagram of a second embodiment of a data receiving apparatus according to the present invention. As shown in FIG. 7, the apparatus in this embodiment may include: a receiving circuit 41, a processing circuit 42 and a sending circuit 43. The receiving circuit 41 is configured to receive beam characteristic information sent by a base station, where the beam characteristic information is generated by the base station by performing beam characteristic design according to uplink data or a pilot. The processing circuit 42 is configured to determine a data recovery method according to the beam characteristic information, where the data recovery method corresponds to a precoding mode determined by the base station according to the beam characteristic information. The receiving circuit 41 is further configured to receive precoded data sent by the base station. The processing circuit 42 is configured to perform data recovery processing on the precoded data according to the data recovery method.

The apparatus in this embodiment may be configured to execute the technical solution of the method embodiment shown in FIG. 3, implementation principles and technical effects of the apparatus and the method embodiment are similar, and details are not described herein.

In the several embodiments provided in the present invention, it should be understood that the disclosed apparatus and method may be implemented in other manners. For example, the described apparatus embodiments are merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer equipment (which may be a personal computer, a server, a network equipment, or the like) or a processor to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A data sending method, comprising:

   receiving uplink data or a pilot sent by user equipment by using an uplink subframe;
   performing beam characteristic design according to the uplink data or the pilot, and generating beam characteristic information;
   determining a precoding mode according to the beam characteristic information, and performing precoding processing on to-be-sent data according to the determined precoding mode, wherein the precoding mode comprises a space-time based precoding mode or a space-frequency based precoding mode; and
   sending precoded to-be-sent data to the user equipment.

2. The method according to claim 1, wherein after the performing beam characteristic design according to the uplink data or the pilot, and generating beam characteristic information, the method further comprises:

   sending the beam characteristic information to the user equipment, so that the user equipment determines a data recovery method according to the beam characteristic information, wherein the data recovery method corresponds to the precoding mode.

3. The method according to claim 1 or 2, wherein the performing beam characteristic design according to the uplink data or the pilot, and generating beam characteristic information comprises:

   estimating a position of the user equipment according to the uplink data or the pilot;
   building an antenna steering vector matrix according to the position of the user equipment;
   performing singular value decomposition on the antenna steering vector matrix to obtain a diagonal matrix; and
   determining, according to the diagonal matrix, the beam characteristic information that meets a preset energy threshold.

4. The method according to claim 3, wherein the determining, according to the diagonal matrix, the beam characteristic information that meets a preset energy threshold comprises:

   calculating a ratio of a sum of n largest elements on a main diagonal of the diagonal matrix to a sum of all elements on the main diagonal; and
   determining the corresponding n as the beam characteristic information when the ratio is greater than the preset energy threshold, wherein n is a natural number.

5. The method according to claim 3 or 4, wherein the method further comprises:

performing beam characteristic design according to the uplink data or the pilot, and generating a precoding parameter combination vector.

6. The method according to claim 5, wherein the performing beam characteristic design according to the uplink data or the pilot, and generating a precoding parameter combination vector comprises:

obtaining the precoding parameter combination vector according to the beam characteristic information and the antenna steering vector matrix.

7. The method according to claim 5 or 6, wherein the performing precoding processing on to-be-sent data according to the determined precoding mode comprises:

performing precoding processing on the to-be-sent data according to the determined precoding mode and the precoding parameter combination vector.

8. A data receiving method, comprising:

receiving beam characteristic information sent by a base station, wherein the beam characteristic information is generated by the base station by performing beam characteristic design according to uplink data or a pilot;
determining a data recovery method according to the beam characteristic information, wherein the data recovery method corresponds to a precoding mode determined by the base station according to the beam characteristic information; and
receiving precoded data sent by the base station, and performing data recovery processing on the precoded data according to the data recovery method.

9. A data sending apparatus, comprising:

a receiving module, configured to receive uplink data or a pilot sent by user equipment by using an uplink subframe;
a precoding parameter combination generation module, configured to perform beam characteristic design according to the uplink data or the pilot, and generate beam characteristic information;

a precoding processing module, configured to determine a precoding mode according to the beam characteristic information, and perform precoding processing on to-be-sent data according to the determined precoding mode, wherein the precoding mode comprises a space-time based precoding mode or a space-frequency based precoding mode; and
a sending module, configured to send precoded to-be-sent data to the user equipment.

10. The apparatus according to claim 9, wherein the sending module is further configured to send the beam characteristic information to the user equipment, so that the user equipment determines a data recovery method according to the beam characteristic information, wherein the data recovery method corresponds to the precoding mode.

11. The apparatus according to claim 9 or 10, wherein the precoding parameter combination generation module is specifically configured to: estimate a position of the user equipment according to the uplink data or the pilot; build an antenna steering vector matrix according to the position of the user equipment; perform singular value decomposition on the antenna steering vector matrix to obtain a diagonal matrix; and determine, according to the diagonal matrix, the beam characteristic information that meets a preset energy threshold.

12. The apparatus according to claim 11, wherein the precoding parameter combination generation module is specifically configured to: calculate a ratio of a sum of n largest elements on a main diagonal of the diagonal matrix to a sum of all elements on the main diagonal; and determine the corresponding n as the beam characteristic information when the ratio is greater than the preset energy threshold, wherein n is a natural number.

13. The apparatus according to claim 11 or 12, wherein the precoding parameter combination generation module is further configured to perform beam characteristic design according to the uplink data or the pilot, and generate a precoding parameter combination vector.

14. The apparatus according to claim 13, wherein the precoding parameter combination generation module is specifically configured to obtain the precoding parameter combination vector according to the beam characteristic information and the antenna steering vector matrix.

15. The apparatus according to claim 13 or 14, wherein the precoding processing module is specifically configured to perform precoding processing on the to-be-sent data according to the determined precoding mode and the precoding parameter combination vector.

16. A data receiving apparatus, comprising:

a receiving module, configured to receive beam characteristic information sent by a base station, wherein the beam characteristic information is generated by the base station by performing beam characteristic design according to uplink data or a pilot;
a data recovery method determining module, configured to determine a data recovery method according to the beam characteristic information, wherein the data recovery method corresponds to a precoding mode determined by the base station according to the beam characteristic information; wherein
the receiving module is further configured to receive precoded data sent by the base station; and
a data processing module, configured to perform data recovery processing on the precoded data according to the data recovery method.

| Receive uplink data or a pilot sent by user equipment by using an uplink subframe | 101 |
| Perform beam characteristic design according to the uplink data or the pilot, and generate beam characteristic information | 102 |
| Determine a precoding mode according to the beam characteristic information, and perform precoding processing on to-be-sent data according to the determined precoding mode, where the precoding mode includes a space-time based precoding mode or a space-frequency based precoding mode | 103 |
| Send precoded to-be-sent data to the user equipment | 104 |

FIG. 1

RE

$Hw_1x_1 + Hw_2x_2$ | $-H^*w_2^*x_1 + H^*w_1^*x_2$

Base station

FIG. 2

Receive beam characteristic information sent by a base station ⟩⟩ 201

Determine a data recovery method according to the beam characteristic information ⟩⟩ 202

Receive precoded data sent by the base station, and perform data recovery processing on the precoded data according to the data recovery method ⟩⟩ 203

FIG. 3

Receiving module ⟩⟩ 11

Precoding parameter combination generation module ⟩⟩ 12

Precoding processing module ⟩⟩ 13

Sending module ⟩⟩ 14

FIG. 4

```
┌─────────────────────────────┐
│     Receiving module        │ ⌇ 21
└─────────────────────────────┘
              │
┌─────────────────────────────┐
│    Data recovery method     │ ⌇ 22
│     determining module      │
└─────────────────────────────┘
              │
┌─────────────────────────────┐
│    Data processing module   │ ⌇ 23
└─────────────────────────────┘
```

FIG. 5

```
┌─────────────────────────────┐
│     Receiving circuit       │ ⌇ 31
└─────────────────────────────┘
              │
┌─────────────────────────────┐
│     Processing circuit      │ ⌇ 32
└─────────────────────────────┘
              │
┌─────────────────────────────┐
│      Sending circuit        │ ⌇ 33
└─────────────────────────────┘
```

FIG. 6

| Receiving circuit | ⌇ 41 |

| Processing circuit | ⌇ 42 |

| Sending circuit | ⌇ 43 |

FIG. 7

# INTERNATIONAL SEARCH REPORT

| International application No. |
|---|
| PCT/CN2014/083421 |

### A. CLASSIFICATION OF SUBJECT MATTER

H04B 7/06 (2006.01) i; H04B 7/04 (2006.01) i;

According to International Patent Classification (IPC) or to both national classification and IPC

### B. FIELDS SEARCHED

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

CNTXT; CNABS; CNKI; VEN: frequen+, space, time, sfbc, stbc, precod+, determin+, choos+, pre, select+, cod+, chang+, switch+, type, mode, space-frequency, space-time

### C. DOCUMENTS CONSIDERED TO BE RELEVANT

| Category* | Citation of document, with indication, where appropriate, of the relevant passages | Relevant to claim No. |
|---|---|---|
| X | CN 101505205 A (SHARP KABUSHIKI KAISHA) 12 August 2009 (12.08.2009) description, page 19, the fourth paragraph to page 22, the fourth paragraph, and figure 19 | 8, 16 |
| A | CN 101505205 A (SHARP KABUSHIKI KAISHA) 12 August 2009 (12.08.2009) description, page 19, the fourth paragraph to page 22, the fourth paragraph, and figure 19 | 1-7, 9-15 |
| A | US 2010232535 A1 (NEC LABORATORIES AMERICA, INC.) 16 September 2010 (16.09.2010) the whole document | 1-16 |
| A | CN 103166688 A (SHENZHEN INST. INFORMATION TECHNOLOGY et al.) 19 June 2013 (19.06.2013) the whole document | 1-16 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 April 2015 | 06 May 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HUANG, Hui<br><br>Telephone No. (86-10) 62412148 |

Form PCT/ISA /210 (second sheet) (July 2009)

## INTERNATIONAL SEARCH REPORT
Information on patent family members

International application No.

PCT/CN2014/083421

| Patent Documents referred in the Report | Publication Date | Patent Family | Publication Date |
|---|---|---|---|
| CN 101505205 A | 12 August 2009 | WO 2009099151 A1 | 13 August 2009 |
| US 2010232535 A1 | 16 September 2010 | None | |
| CN 103166688 A | 19 June 2013 | None | |

Form PCT/ISA /210 (patent family annex) (July 2009)